# EUROPEAN PATENT SPECIFICATION

(11) **EP 4 215 327 B1**
(45) Date of publication and mention of the grant of the patent: **24.07.2024**
(21) Application number: 23152541.1
(22) Date of filing: 19.01.2023
(51) Int. Cl.: B27M 1/08, B23Q 1/01, B23Q 39/02, B23Q 39/04

(54) **PANEL PROCESSING MACHINE AND PANEL PROCESSING METHOD WITH SAID MACHINE**
PLATTENBEARBEITUNGSMASCHINE UND PLATTENBEARBEITUNGSVERFAHREN MIT DIESER MASCHINE
MACHINE DE TRAITEMENT DE PANNEAU ET PROCÉDÉ DE TRAITEMENT DE PANNEAU AVEC LADITE MACHINE

(30) Priority: 19.01.2022 IT 202200000851; 10.05.2022 IT 202200009638
(43) Date of publication of application: 26.07.2023
(73) Proprietor: Impresa 2000 di Sacchi Paride S.r.l., 47924 Rimini (RN) (IT)
(72) Inventor: SACCHI, Paride, 47924 RIMINI (RN) (IT)
(74) Representative: Negrini, Elena

(56) References cited:
- EP-B1- 2 035 199
- DE-A1- 102014 013 423

## Description

### DESCRIPTION OF THE INVENTION

The present invention relates to the sector of industrial panel processing, and in particular relates to a panel processing machine.

Panel processing machines are known, for example for drilling and milling wooden panels for furniture, comprising a support structure, a support and sliding plane for the panels having a pick-up area and an unloading area, grab means for moving the panels on the support and sliding plane from the pick-up area to the unloading area, and at least one working head fixed in correspondence with a processing area between the pick-up and unloading areas for processing the panels by means of tools attached thereto.

Document EP2035199B1 describes a machine tool comprising a working head, at least one support for the workpieces, and a control unit. The support is provided with clamp members that can be adjusted to variable positions with respect to the support along at least two orthogonal adjustment directions. It discloses thus the preamble of claim 1.

Document DE102014013423A1 describes a plant for processing panels comprising a plurality of processing modules arranged in series and a pick-up and handling device for moving the panels sliding under a processing surface.

The main drawback of known panel processing machines consists in that the working head remains inactive during the time interval necessary for the grab means to transport a processed panel to the unloading area, return to the pick-up area and transport the following panel to the processing area.

Another drawback of known machines consists in that the time required to perform different processes on the same panel is high, due to the need to replace the tools of the working head.

A further drawback of known machines consists in that they generally allow only one panel to be processed at a time.

An object of the present invention is to propose a panel processing machine in which the time elapsing between the processing of one panel and the processing of the following panel is extremely reduced or nil.

Another object is to propose a panel processing machine capable of processing several panels at the same time.

Another object is to propose a machine that allows the easy and continuous execution of different processes on the same panel.

Another object is to propose a panel processing method in which the time elapsing between the processing of one panel and the processing of the next panel is minimum.

Another object is to propose a panel processing method in which the same working head processes several panels simultaneously.

These objects are achieved with a panel processing machine according to claim 1 and a method according to claim 8 using such a machine for processing panels. Further variations are disclosed by the dependent claims.

The following drawings 1-6 and 12 are not according to the invention and are present for illustration purposes only.
- figure 1 shows a schematic top view of the panel processing machine object of the present invention;
- figure 2 shows a side view in section along plane II-II of the machine of figure 1;
- figure 3 shows a front view in section along plane III-III of the machine of figure 1;
- figures 4, 5 and 6 show schematic top views of respective variants of the machine of figure 1;
- figure 7 shows a schematic top view of a second embodiment of the machine of figure 1;
- figure 8 shows a front view in section along plane VIII-VIII of the machine of figure 7;
- figures 9a and 9b show schematic, enlarged and partial front views of a detail of a variant of the machine of figure 8, in which some parts have been removed to better highlight others;
- figures 10a and 10b show schematic, enlarged and partial front views of a detail of a further variant of the machine of figure 8, in which some parts have been removed to better highlight others;
- figure 11 shows a schematic and partial front view of a variant of the machine of figures 10a and 10b;
- figure 12 shows a schematic top view of a variant of the machine of figure 1.

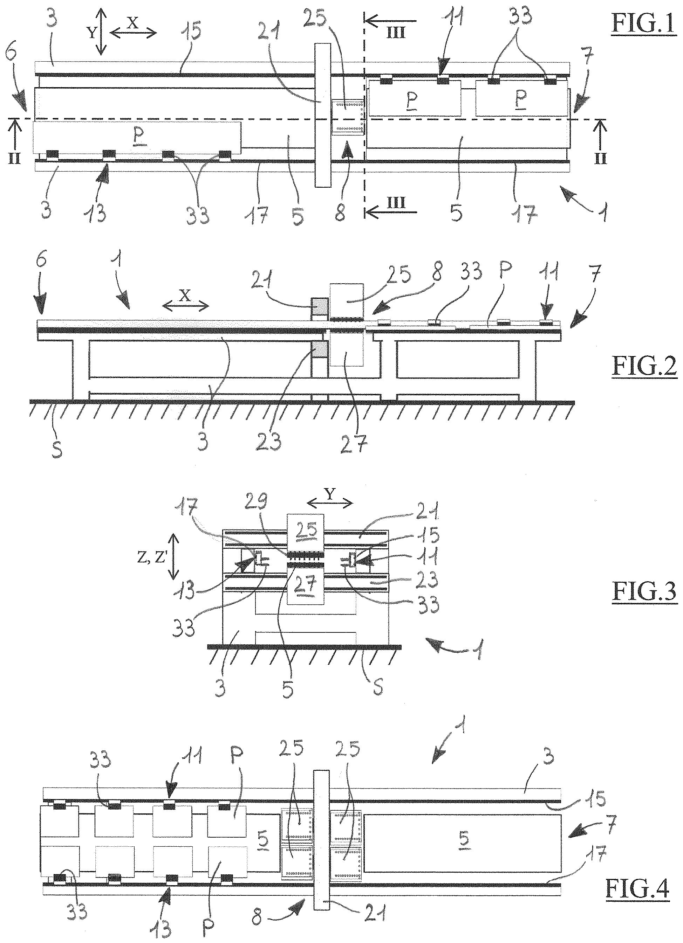

With reference to figures 1-12, numeral 1 indicates the machine for processing panels, plates or elements with three-dimensional development, object of the present invention. Such panels are for example made of wood or wood-based, metal, plastic, glass, or the like.

The machine 1 comprises:
- a support structure 3;
- a set of jig elements 5 for the panels P, assigned to orient the panels P almost horizontally by keeping an upper or lower face thereof at respective predetermined equal or different processing heights Z, Z', along a path between an entrance 6 and an exit 7 for said panels P;
- at least a set of first movement members 11 and a set of second movement members 13 translating in both directions respectively along at least one first longitudinal track 15 and at least one second longitudinal track 17 connected to the support structure 3 and oriented in the longitudinal direction X for moving the panels P along said path between the entrance 6 and the exit 7 which is almost parallel to the longitudinal direction X;
- at least one upper 25 and/or lower 27 working head positioned respectively above or below a processing area 8 lying along said path, such at least one working head 25, 27 being provided with at least one tool 29 for processing the panels P, with the at least one working head 25, 27 and/or its respective at least one tool 29 operable at least in the vertical direction by a respective vertical actuator.

The tools 29 are drilling bits, milling bits, blades, lasers for cutting or engraving, or similar instruments, also assigned to operate processes such as inserting pins and the like on panels P. Each tool 29 is preferably connected to its respective working head 25, 27 by means of a mandrel and in a removable manner, so as to be able to be changed with a different tool 29 according to the processing required on the panels P or such as to be replaced in case of wear or break up.

The support structure 3 is for example of the truss frame type with beams, and rests on or is anchored to a floor S or to a wall of the room in which the machine 1 is installed and operates.

Each longitudinal track 15, 17 comprises, for example, a bar, or rail, or rack, or belt, or screw, or the like, and is preferably fixed to a respective side longitudinal beam of the support structure 3, so that the at least one first longitudinal track 15 and the at least one second longitudinal track 17 are arranged on opposite sides of the machine 1.

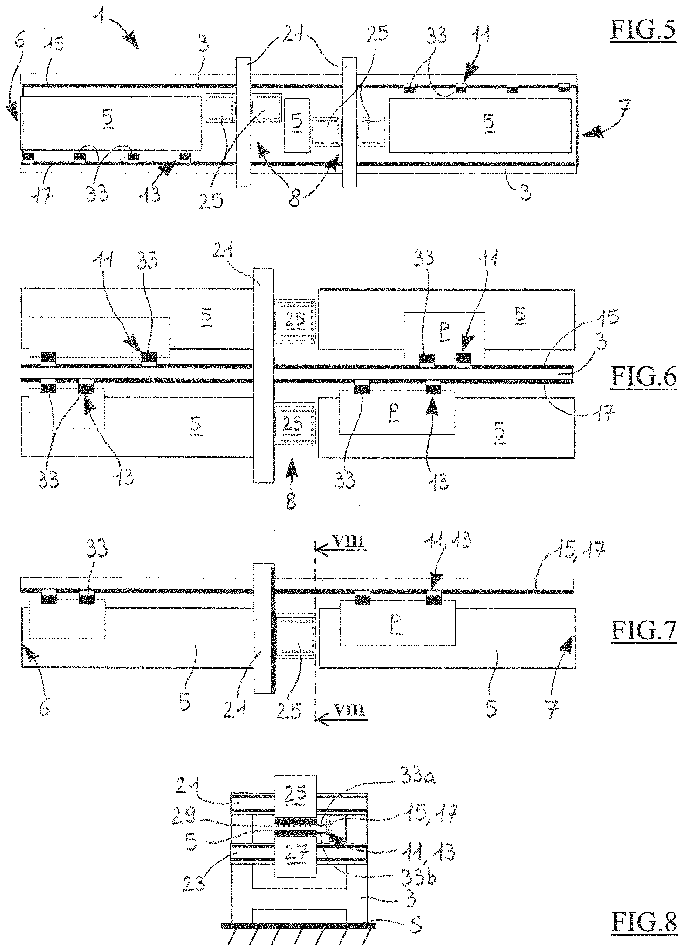

A variant of the machine 1, illustrated in particular in figure 6, provides that several different longitudinal tracks 15, 17 are fixed to the same beam of the support structure 3 at opposite sides of the beam itself. Each longitudinal track 15, 17 is associated with a respective set of movement members 11, 13, with one or more sets of movement members 11, 13 assigned to translate and transport panels P on one side of the beam, and with one or more sets of movement members 13, 11 assigned to translate and transport panels P on the opposite side of the beam.

Optionally, each longitudinal track 15, 17 can be movable with respect to the support structure 3 in the transverse direction Y by effect of respective alignment devices, of the type with hydraulic piston or screw or mobile arm or similar, fixed to the support structure 3 and to the longitudinal tracks 15, 17 themselves, or the parts of the support structure 3 to which these longitudinal tracks 15, 17 are fixed, for example one or respective beams, can be movable in the transverse direction Y by means of said alignment devices. This allows for example to adjust the transversal distance between two longitudinal tracks 15, 17 arranged in parallel on opposite sides of the machine 1 according to the transversal dimension of the panels P to be processed.

The movement members 11, 13 can translate along their respective longitudinal tracks 15, 17 in both directions, i.e. towards the entrance 6 or towards the exit 7, independently of each other. This offers for example the advantage that, in correspondence with an operating condition of the machine 1, at least one set of movement members 11, 13, or a subset thereof, after releasing at least one panel P processed at the exit 7 of the machine 1, can return to the entrance 6 along its respective longitudinal track 15, 17 to pick up another panel P to be processed, while simultaneously at least a different set of movement members 13, 11, or a subset thereof, can translate along the respective longitudinal track 17, 15 transporting a panel P through the processing area 8, making the processing of the panels P almost continuous and free of pauses or periods of inactivity of the working heads 25, 27 and/or of the tools 29 and consequently increasing the overall operating efficiency of machine 1.

Optionally, the movement members 11, 13 are constrained to their respective longitudinal tracks 15, 17 by means of respective transverse actuators 19, for example provided with support arms for the movement members 11, 13 fixed to carriages coupled to and sliding along the longitudinal tracks 15, 17 and operable in the transverse direction Y, for the movement in the transverse direction Y of said movement members 11, 13. The transverse actuators 19 can transversely move the single movement members 11, 13 individually, or they can collectively move all the respective set of the latter.

Each movement member 11, 13 comprises one or more respective grab elements 33, and is constrained preferably to one but possibly even to more respective longitudinal tracks 15, 17. Each movement member 11, 13 is individually and independently movable in the longitudinal direction X and translatable along its respective longitudinal track 15, 17 by means of a respective drive element, having for example a cogwheel coupled to a respective rack which belongs to the longitudinal track 15, 17 or which is parallel to it.

Each grab element 33 is operable by a respective grab actuator to clamp, i.e. grasp or block, and release at least one panel P. Alternatively, if a movement member 11, 13 comprises several grab elements 33, these latter can be operated by means of an actuator element, common thereto, of the movement member itself. Depending on the dimensions of the panels P, the type of processing programmed on them and the type of the grab elements 33, each set of movement members 11, 13 can move one or even more panels P simultaneously, for example one for each of its own grab elements 33, and similarly each grab element 33 can optionally lock several panels P simultaneously, for example overlapped or queued with one another along the longitudinal direction X.

The grab elements 33 are for example of the suction cup or similar type, or preferably they are of the clamp type, with each grab element 33 comprising at least one upper jaw 33a and at least one lower jaw 33b opposite and vertically aligned with the upper jaw 33a. At least one of the upper 33a and lower 33b jaws is movable with a vertical component and can be operated in locking and releasing by means of its respective grab actuator.

Preferably, the upper jaw 33a can be operated, while its corresponding lower jaw 33b is not operated, i.e. it is fixed with respect to its respective movement member 11, 13, and carries a jig element 5, for example a rubber or silicone or similar non-slip material insole fixed to an upper surface of the lower jaw 33b itself to interpose between the latter and the panels P grabbed or supported thereby.

Alternatively, the jig element 5 coincides with the upper surface itself of the lower jaw 33b, which is rigid, being for example plastic or metal.

Said jig elements 5 favour the grip of the panels P by the grab elements 33 , and keep the panels P horizontal and with one of the two faces upper or lower at a predetermined processing height Z, Z', for example they keep the lower face at the predetermined processing height Z from the entrance 6 to the exit 7 of the machine 1.

Alternatively, the upper jaw 33a of the grab elements 33 is fixed with respect to its movement member 11, 13 and carries a jig element 5 fixed to its lower surface, with the lower jaw 33b operable in locking and releasing.

In a further variant of the grab elements 33, both the upper jaws 33a and the lower jaws 33b can be operated, and at least one of them is provided with a jig element 5 which, when this jaw is locked on a panel P, maintains a predetermined upper or lower face of the panel P grabbed thereby at the predetermined processing height Z, Z'.

Machine 1 or another machine, provided that it is equipped with at least one longitudinal track 15, 17, has clamp grab elements 33 which are movable in at least one direction other than the sliding direction of such longitudinal track 15, 17, i.e. at least in a direction other than the longitudinal direction X, such as the vertical or transverse Y direction.

In particular, it is also possible that the grab elements 33, which can be applied to any type of machine provided that it has track means for such grab elements 33 of movement members 11, 13, are allowed to move with respect to their respective movement members 11, 13. It is in fact provided that at least one or preferably each of the movement members 11, 13 is equipped with a carriage which is slidably fixed to its respective longitudinal track 15, 17, along which it is movable or translatable by means of a respective actuator, and provided with and carrying one or more grab elements 33. In turn, a further respective positioning actuator is interposed and fixed between each carriage and its respective grab element 33 or grab elements 33, acting thereon to make them movable also in a direction different from the longitudinal direction X; each grab element 33 is thus movable also in a perpendicular direction, or with a perpendicular component, to the main track and to the longitudinal direction X of sliding of the carriage. In this way each grab element 33 is optionally also movable at least in a direction perpendicular to the longitudinal tracks 15, 17 with respect to its corresponding movement member 11, 13, which is constrained thereto, and with respect to the same respective longitudinal track 15, 17, by means of said positioning actuator.

In the event that a movement member 11, 13 is provided with several grab elements 33, for example with several parallel clamps, it is optionally possible that a single positioning actuator is fixed to the carriage of said movement member 11, 13 and moves all respective grab elements 33 thereof.

The positioning actuators are of the linear type, for example screw, rail or pneumatic, or of the rotating arm type, or the like, such as to allow the grab elements 33 to move with respect to the movement members 11, 13. Each grab element can move with respect to the rest position by a predetermined stroke on its carriage or possibly can also project overhanging with respect to the latter.

In an embodiment of the machine 1, illustrated in particular in figures 7-11, several longitudinal tracks 15, 17 are fixed to the same beam of the support structure 3, and thus on the same longitudinal side of the machine 1, side by side on the same side of the beam or fixed to different sides, even opposite, thereof. Each longitudinal track 15, 17 is associated with a respective set of movement members 11, 13, with all the sets of movement members 11, 13 acting, i.e. assigned to translate and transport panels P, on the same side of the beam, i.e. facing and operating along the path of the panels P between the entrance 6 and the exit 7.

This solution provides the advantage of reducing the overall dimensions, in particular the transversal overall dimensions, of the machine 1.

This solution also offers the advantage that, in the aforementioned second embodiment of the machine 1, in which the movement members 11, 13 are movable along respective longitudinal tracks 15, 17 fixed to the same beam of the support structure 3 and operate on the same side of this beam, the movement members 11, 13 can slide between the entrance 6 and the exit 7 of the machine 1 in both directions, independently of each other, without interfering with each other, i.e. without the grab elements 33 of the first set of movement members 11 interfere with the grab elements 33 of the second set of movement members 13. This allows the longitudinal tracks 15, 17 to be fixed even close to each other, keeping the section of the beam that supports them reduced, and allowing all the grab elements 33 to follow the same trajectory by translating the panels P to the predetermined processing height Z, Z', at least while translating a panel P along the path assigned for it between the entrance 6 and the exit 7.

The interference between said grab elements 33 of different sets of movement members 11, 13 is avoided by actuating at least one of the grab elements 33 with respect to the corresponding carriage in a direction perpendicular to the longitudinal direction X of sliding along the respective longitudinal track 15, 17, at least at the intersection with the trajectory of a grab element 33 of a different set of movement members 11, 13. For example, grab elements 33 of different sets are actuated with respect to their corresponding carriages in opposite directions, at least in correspondence of the intersection of their respective trajectories.

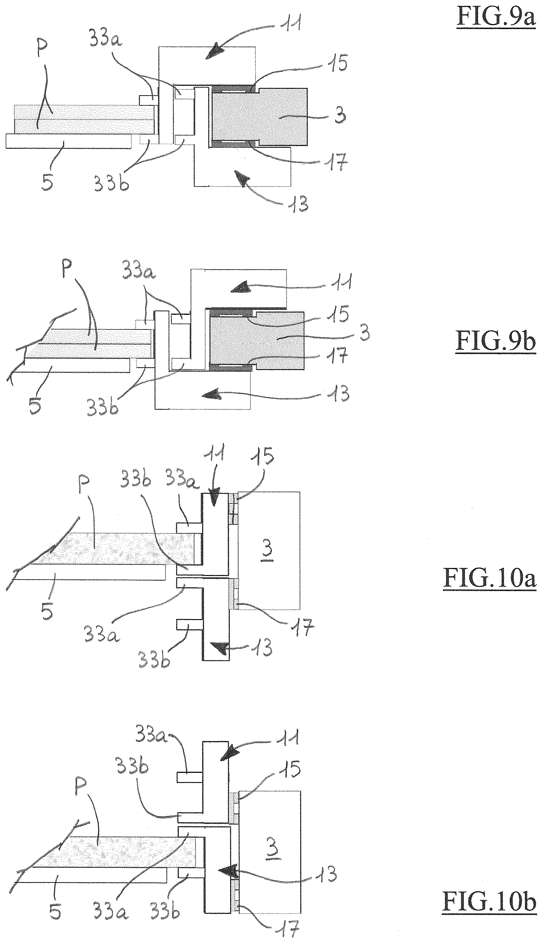

With particular reference, to figures 9a and 9b, the first 15 and second 17 longitudinal tracks are fixed to the same beam of the support structure 3, at the upper and lower opposite sides of this beam. The grab elements 33 of each set of movement members 11, 13, in addition to being able to slide along the longitudinal tracks 15, 17, can be operated along their respective carriages in the transverse direction Y with respect to the corresponding longitudinal track 15, 17, to modify their own trajectory at least at an intersection with the grab elements 33 of the opposite set of movement members 11, 13.

The grab elements 33 and their respective carriages and positioning actuators are sized so that the grab elements 33 are able to distance themselves horizontally from their respective longitudinal track 15, 17 with respect to the carriages by a distance greater than the transversal size of the clamps of the opposite grab elements 33.

Each grab element 33 carrying at least one panel P is actuated in the transverse direction Y and away from its respective longitudinal track 15, 17 at least at the intersection with the trajectory of a free grab element 33, i.e. not carrying any panel P, which remains in the rest position with respect to its own carriage. Said actuation by their respective positioning actuator is assigned to ensure that the grab elements 33 engaged or carrying a panel P can proceed along almost rectilinear trajectories by guiding the panels P along the path assigned for them between the entrance 6 and the exit 7, with the free grab elements 33, i.e. not carrying any panel P, assigned to avoid interfering with the grab elements 33 engaged.

Preferably, the grab elements 33 carrying one or more panels P are actuated to be extended, i.e. maximally extended and distanced from their respective longitudinal track 15, 17, along all or almost all of the path from the entrance 6 to the exit 7, thus being able to follow a rectilinear trajectory between entrance 6 and exit 7, and in particular in correspondence with the processing of the panels P. The grab elements 33 of the opposite set of movement members 11, 13, free from the panels P and proceeding in the opposite direction to pick up other panels P to be processed at the entrance 6, follow a trajectory parallel to their respective longitudinal track 17, 15 but closer to the latter, so that each free grab element 33 can cross and pass through without interference each opposite movement member 11, 13 sliding between the carriage and the maximally extended grab element 33 of the latter.

Possibly, alternatively, the trajectories of the grab elements 33 of different sets of movement members 11, 13 may coincide for some sections, with the grab elements 33 engaged by a panel P deviating from the rectilinear trajectory of the free grab elements 33 in proximity of or at an intersection with the latter. In this way the grab elements 33 of one set can avoid and not interfere with the grab elements 33 of the opposite set.

Naturally, the same operation is also applicable to allow free grab elements 33 of different sets of movement members 11, 13 proceeding in opposite directions to cross each other without interfering with each other.

By way of further example, figures 10a and 10b illustrate a variant of the second embodiment of the machine 1 in which the first and second longitudinal tracks 15, 17 are fixed to the same side of the same beam of the support structure 3, facing the predefined path for the panels P, vertically side by side to each other, and guide the longitudinal movement of their respective sets of movement members 11, 13.

In order for the panels P to be translated at the same processing height Z, Z' by the different movement members 11, 13, the grab elements 33 thereof must follow the same linear trajectory from the entrance 6 to the exit 7 when carrying a panel P. Once the processed panel P has been released at the exit 7, said grab elements 33, now free, when returning towards the entrance 6 are actuated along their respective carriages perpendicular to the longitudinal direction X, and in particular vertically, i.e. upwards or downwards, to avoid encountering the grab elements 33 of the opposite movement members 11, 13, which slide in the opposite direction along the opposite longitudinal track 15, 17, translating the subsequent panel or panels P towards the exit 7.

Preferably, therefore, at least at the crossing of grab elements 33 of different movement members 11, 13, the free grab elements 33 are operated vertically relative to their respective movement members 11, 13 and their respective longitudinal track 15, 17 to pass over and avoid the grab elements 33 of the opposite movement members 11, 13 which are carrying one or more panels P.

The grab elements 33, the carriages and the stroke of the positioning actuators are shaped and sized so that the grab elements 33 can distance themselves vertically from the respective longitudinal track 15, 17 by a distance greater than the vertical size of the clamps of the opposite grab elements 33.

The described mechanism, in addition to allowing the movement members 11, 13 of different sets proceeding in opposite directions to cross without interference, also allows, in the event that none of these movement members 11, 13 is engaged by a panel P, the overtaking without interference of movement members 11, 13 of different sets proceeding in the same direction.

Obviously, grab elements 33 belonging to the same set of movement members 11, 13, thus movable longitudinally along the same longitudinal track 15, 17, cannot pass over or surpass each other, since the movement of each one is longitudinally constrained by the position of the other grab elements 33 of the same set.

The vertical movement of the grab elements 33 relative to their respective longitudinal track 15, 17 also allows to move panels P from the entrance 6 to the exit 7 at the correct processing height Z, Z' even if said longitudinal track 15, 17 is fixed at a height different from the processing height.

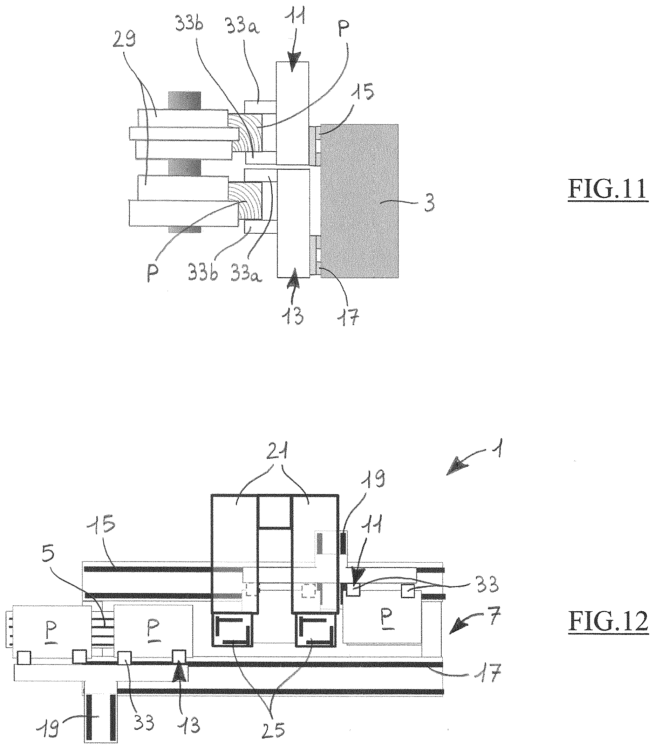

Furthermore, the variant of the embodiment of the machine 1 just described offers the advantageous possibility of simultaneously performing different processing operations on panels P using different tools 29 mounted on the same working head 25, 27, as shown by way of example in figure 11.

Each upper working head 25 is slidably constrained to at least one upper transverse track 21, and each lower working head 27 is slidably constrained to at least one lower transverse track 23. Optionally, a working head 25, 27 can be slidably constrained to several transverse tracks 21, 23, for example for its more stable actuation or if the working head 25, 27 is particularly heavy and requires greater support.

The transverse tracks 21, 23 are elongated, comprising for example a rack, or bar, or rail, or belt, or screw, or piston, or telescopic arm, or the like, and are connected to the support structure 3, having their ends constrained to the support structure 3 or being fixed along their entire length to a single or several transversal beams of the support structure 3 itself. These transverse tracks 21, 23 are oriented in the transverse direction Y with respect to the longitudinal tracks 15, 17.

Optionally, one or more upper 21 and/or lower 23 transverse tracks are movable with respect to the support structure 3 in the longitudinal direction X by means of respective alignment devices acting on said transverse tracks 21, 23 or on mobile parts of the support structure 3 to which these transverse tracks 21, 23 are fixed.

The working heads 25, 27 are moved along the respective transverse track 21, 23 by means of linear actuators, for example having a cogwheel for linear movement along a respective rack, proper to each working head 25, 27 or to each transverse track 21, 23.

Each jig element 5 not fixed to a lower jaw 33b can be connected to the support structure 3, being fixed thereto directly or by means of actuator elements, or alternatively it is connected at the top to a respective lower working head 27: in this case the jig element 5 has an through opening for each of the tools 29 of said lower working head 27, so as to be able to abut with the panels P aligning them to the predetermined processing height Z, Z' without however interfering with the processing performed on the panels P by said tools 29, which pass through the jig element 5 without damaging it.

Each jig element 5 can be fixed, being solidly fixed to the support structure 3 or to a respective lower working head 27, or it can be operated in the vertical direction by means of actuator elements associated with the support structure 3 or to said lower working head 27, for example to align different panels P at different processing heights Z, Z', or for example to break contact with a panel P while it is being moved outside the processing area 8.

At least one jig element 5, for example and preferably those connected to the support structure 3 or to a lower working head 27, is of the low friction type with the panels P, in the so-called air cushion, with balls, rollers, carpet, belts, or the like, so as to keep the panels P at the predetermined processing height Z, Z' while allowing them to be easily translated by the movement members 11, 13.

The machine 1 can furthermore comprise a programmable electronic control unit connected to at least one, preferably to all, the active elements of the machine 1 itself, for the control and command of these active elements in order to carry out the desired processes on the panels P. Such active elements include the vertical actuators, the linear actuators, the transverse actuators 19, the drive elements, the actuator elements, the grab actuators, the positioning actuators, and other active elements of the machine 1. It is also possible to install in the machine 1 sensor elements connected to the electronic control unit, for the feedback control of the active elements.

With reference by way of example to figures 1-3, it is provided that the first longitudinal track 15 and the second longitudinal track 17 are fixed to respective opposite longitudinal sides of the machine 1 or of the support structure 3; an upper working head 25 is constrained to at least one upper transverse track 21 and a lower working head 27 is constrained to a lower transverse track 23. At least one jig element 5, horizontal and of the low friction type, for example an air cushion, is connected to the support structure 3 and positioned between the two longitudinal tracks 15, 17 to slidably support the panels P between the entrance 6 and the processing area 8 and/or between the processing area 8 and the exit 7. It is also provided that the machine 1 is equipped with several first 15 and second 17 longitudinal tracks and with a plurality of upper 25 and lower 27 working heads and respective upper 21 and lower 23 transverse tracks.

In the embodiment of the machine 1, making reference by way of example to figures 9a-10b, the first longitudinal tracks 15 and the second longitudinal tracks 17 are fixed on the same longitudinal side of the machine 1. At least one upper working head 25 is constrained to an upper transverse track 21 and at least one lower working head 27 is constrained to a lower transverse track 23. At least one low-friction jig element 5 is connected to the support structure 3 and flanked by the two longitudinal tracks 15, 17 to slidably support the panels P at least between the entrance 6 and the processing area 8 and/or between the processing area 8 and the exit 7.

With particular reference now to figures 4-8, it is provided that the machine 1 comprises two or more working heads 25, 27 slidably fixed to the same transverse track 21, 23 or to several transverse tracks 21, 23 which are movable and can be operated in parallel or independently of each other. For example, the same transverse track 21, 23 can slidably support two working heads 25, both facing the entrance area 6 or the exit area 7 of the jig element 5, or facing opposite ends of the jig 5, or the same transverse track 21, 23 can slidably support four working heads 25, two facing the entrance area 6 and two towards the exit area 7, or, furthermore, each of two or more upper transverse tracks 21, mutually parallel and spaced apart, can slidably support one or more upper working heads 25.

As shown by way of example in figure 6, it is provided in one of its variants that two distinct sets of jig elements 5 are arranged respectively on the right and left sides, i.e. transversely opposite, of a central longitudinal beam of the support structure 3. The jig 5 of said sets can be fixed to the support structure 3 or to the central beam or to both.

The first 15 and second 17 longitudinal tracks are side by side and adjacent and are fixed to a respective side of such central beam so that each of the first 11 and second 13 movement members faces towards a respective jig element 5. With such arrangement the machine 1 essentially has two mutually independent processing lines for the panels P, each having its own movement members 11, 13 and working heads 25, 27 which are proper or common to both lines.

At least one working head 25, 27 can in particular be provided with two or more tools 29, spaced apart from each other by a predetermined longitudinal distance.

Preferably, each working head 25, 27 is provided with two tools 29, for example with two drilling or milling bits constrained in respective mandrels. The two bits are longitudinally aligned or misaligned, possibly in an adjustable position on its respective working head 25, 27; preferably, the longitudinal component of their mutual distance, i.e. their predetermined longitudinal distance, is non-zero.

With extreme advantage, when the movement members 11, 13 simultaneously carry two panels P arranged in series in the longitudinal direction X keeping them at a predetermined distance from each other, a single vertical actuation of the working head 25, 27 and/or of its respective tools 29, duly positioned with respect to the two panels P, can simultaneously produce a hole or milling in each panel P.

Naturally, the same advantage can also be found for a greater number and/or for a different type of tools 29 constrained to the same working head 25, 27.

The present invention also relates to a panel processing method in accordance with claim 8. This method includes among others the steps of:
- grabbing a panel P, or possibly several panels P, by at least the first 11 and/or second 13 movement members at an entrance 6 of the machine 1 for the panels P;
- translating the panel P at least in the longitudinal direction X by means of said movement members 11, 13;
- processing of the panel P by means of at least one tool 29 mounted on a working head 25, 27, or possibly by means of several tools 29 of the same or different working heads 25, 27, in correspondence with the processing area 8 of the machine 1, with each tool 29 and/or the respective working head 25, 27 operated at least in the vertical direction and optionally also operated in other orthogonal directions, preferably at least also in the transverse direction Y;
- releasing of the panel P at an exit 7 of machine 1.

The actuation of the tool 29 and/or of its respective working head 25, 27 contributes at least to the vertical component of the processing of the panel P, preferably also to the transversal component, since the working heads 25, 27 slide along the transverse tracks 21, 23, and the actuation of the movement members 11, 13 translating the panel P contributes at least to the longitudinal component of said processing.

While movement members 11, 13 carry the panel P between the entrance 6 and the exit 7, at the same time other movement members 11, 13 are free to translate with or without other panels P.

For example, while first movement members 11 translate the panel P in correspondence with the processing area 8, second movement members 13 are free to return from the exit 7 to the entrance 6 to pick up another panel P and translate it towards the processing area 8, so that, as soon as the previous panel P has been processed, while this is being moved by the first movement members 11 from the processing area 8 towards the exit 7, the panel P carried by the second movement members 13 enters the processing area 8 for processing; in the meantime the first movement members 11, having released their respective panel P at the exit 7 of the machine 1, are free to return to the entrance 6 to pick up a subsequent panel P. The two sets of movement members 11, 13 cross each other without interfering with each other, as already described above. Said operation offers the considerable advantage of maintaining almost continuous the operation of the tools 29, without these remaining inoperative waiting for the next panel to be processed, and therefore the working efficiency of the machine 1 is considerably increased.

Preferably, the interference between movement members belonging to different sets 11, 13 is avoided by shifting the grab elements 33 of the free movement members 11, 13, at least in correspondence with the interception of the trajectory of these with the trajectory of movement members 11, 13 of a different set and carrying one or more panels P. Such offset is operated by actuation of the respective positioning actuators of said free movement members 11, 13.

A variant of the method provides that at least two panels P are simultaneously translated by respective grab elements 33 of the same set of movement members 11, 13, with a front panel P preceding a rear panel P along the longitudinal direction X. In the configuration of the machine 1 in which at least one working head 25, 27 is provided with two or more tools 29, the movement members 11, 13 are operated by the electronic control unit, possibly with the aid of optical, electromagnetic or mechanical sensors assigned to detect the position of the panels P, in such a way that a tail end of the front, i.e. more forward, panel P is in contact with the head end of the rear, i.e. more rearward panel P, or preferably in such a way that the two panels P are longitudinally spaced by a distance equal to or less than the predetermined longitudinal distance between the two tools 29 of the same working head 25, 27. If the processing provided for the panels P includes their translation in both directions along the longitudinal direction X, said front and rear panels P are momentarily identified according to the translation direction considered; the tail end of the front panel P and the head end of the rear panel P face each other.

At the processing step, by means of a single operation or so-called lowering of said working head 25, 27, at least one tool 29 thereof processes the front panel P, and simultaneously at least another tool 29 of the same working head 25, 27 processes the rear panel P.

Preferably, the movement members 11, 13 translate the front and rear panels P so as to adjust their mutual longitudinal distance, before and/or during the processing step, to determine the processing positions of the at least two tools 29 of the working head 25, 27 on these panels P, i.e. the positions relative to the panels P at which the tools 29 are operated and carry out the processing.

For example, a working head 25, 27 is provided with two tools 29 which are drilling bits fixed vertically in respective mandrels, longitudinally aligned and spaced apart by a predetermined longitudinal distance. Such drilling bits are assigned to make two holes, as so-called mounting or joining holes, respectively at the tail end of the front panel P and at the head end of the rear panel P. In the grabbing step, two front and rear panels P are picked up in succession at the entrance 6 by means of respective grab elements 33, for example forming part of the first movement members 11. In the translating step, the two panels P are moved towards the processing area 8; the tail end of the front panel P and the head end of the rear panel P are positioned and distanced from each other in such a way that, in the processing step by means of a single actuation of the working head 25, 27, a drilling bit 29 creates a hole in the front panel P at a predetermined distance from the tail end thereof, and the remaining drilling bit 29 simultaneously drills a hole in the rear panel P at a predetermined distance from the head end thereof. It therefore appears evident that, thanks to the freedom of the movement members 11, 13 and of their respective grab elements 33 to be operated and moved independently and without interference, the appropriate translation of the two panels P determines the position of the respective holes following a single actuation of the working head 25, 27.

Moreover, it is possible, for example, that, simultaneously with the processing of said two panels P, grab elements 33 of the second movement members 13 pick up two further panels P at the entrance 6 and move them sequentially behind the rear panel P currently being processed, spacing them mutually and with respect to the latter according to the desired positions of the holes to be made on the panels themselves. The present method provides considerable advantages in terms of efficiency, as the time elapsing between the processing of a panel P and the processing of the subsequent panel P is minimized or even eliminated, and in terms of versatility, as, given the predetermined longitudinal distance between the tools 29 of the same working head 25, 27, the position of the holes or of any process on the panels P can be determined from time to time thanks to the independent movement of each panel P.

By way of further example, a working head 25, 27 is provided with two tools 29 which are milling bits fixed in respective mandrels, longitudinally aligned and spaced apart by a predetermined longitudinal distance. These milling bits are assigned to carry out respective millings at the tail end of the front panel P and at the head end of the rear panel P, to finish, chamfer, create mouldings or perform similar operations on such panels P. In the processing phase, the working head 25, 27 is operated vertically so that the milling bits 29 match the two panels P being processed; optionally, the working head 25, 27 is also operated in the transverse direction Y and/or the movement members 11, 13 translate the panels P in the longitudinal direction X, solidly or even in opposite directions with respect to each other, i.e. by varying the predetermined mutual longitudinal distance in the case of transversal specular processing. These coordinated operations lead to the simultaneous realization of the desired processes on the facing ends of said panels P.

Alternatively, the tools 29 constrained to the same working head 25, 27 can be oriented horizontally in the longitudinal direction X, some in one direction and others in the opposite direction. Firstly, the movement members 11, 13 longitudinally space the front and rear panels P; in the processing step, said working head 25, 27 is lowered vertically positioning the tools 29 between the two panels P at a preselected height with respect to the predetermined processing height Z, Z'; then the movement members 11, 13 bring the two front and rear panels P closer to each other, whose tail and head ends respectively come into contact with the tools 29 and are processed by them; at the end of the processing, the panels P are spaced again to allow the disengagement of the tools 29 and the retraction of the working head 25, 27.

More panels P can also be moved in parallel by the same or by different movement members 11, 13, each possibly followed or preceded by further panels P; several working heads 25, 27 slidably constrained to the same transverse track 21, 23, or to different transverse tracks 21, 23 fixed for example to the same transversal beam of the support structure 3, can each simultaneously process a respective pair of front and rear panels P.

## Claims

1. Panel processing machine comprising:
- a support structure (3);
- a set of jig elements (5) for the panels (P) assigned to orient the panels (P) almost horizontally while maintaining an upper or lower face thereof at respective predetermined heights (Z, Z');
- at least a set of first movement members (11) and a set of second movement members (13) translating in both directions respectively along at least one first longitudinal track (15) and at least one second longitudinal track (17) connected to the support structure (3) and oriented in the longitudinal direction (X) for moving the panels (P) along a path between an entrance (6) and an exit (7) for said panels (P) parallel to the longitudinal direction (X);
- at least one upper (25) and/or lower (27) working head positioned respectively above or below a processing area (8) lying along said path, said at least one working head (25, 27) provided with at least one tool (29) for processing the panels (P), with the at least one working head (25, 27) and/or its respective at least one tool (29) operable at least in the vertical direction by a respective vertical actuator;
each movement member (11, 13) comprises at least one respective grab element (33), each grab element (33) being operable to lock and release at least one panel (P) by effect of a respective grab actuator; each grab element (33) is movable in at least one direction other than the longitudinal direction (X) by means of a respective positioning actuator; each movement member (11, 13) comprises a carriage slidably fixed to its respective longitudinal track (15,17), where each positioning actuator is interposed between its respective carriage and one or more grab elements (33);
the at least one first longitudinal track (15) and the at least one second longitudinal track (17) are fixed on the same longitudinal side of the machine (1), with their respective sets of movement members (11, 13) operating along the path of the panels (P) between the entrance (6) and the exit (7); at least one grab element (33) is operated with respect to its corresponding carriage in a direction perpendicular to the longitudinal direction (X) at least in correspondence with the intersection with the trajectory of a grab element (33) of a different set of movement members (11, 13); the machine (1) being **characterized in that** each grab element (33) not carrying any panel (P) is operated in the vertical direction at least in correspondence with the intersection with the trajectory of a grab element (33) carrying a panel (P), and/or **in that** each grab element (33) carrying at least one panel (P) is operated in the transverse direction (Y) at least in correspondence with the intersection with the trajectory of a grab element (33) carrying no panel (P).

2. Machine according to any one of the preceding claims **characterized in that** each grab element (33) comprises at least one upper jaw (33a) and at least one lower jaw (33b), with at least one jaw (33a, 33b) operable by its respective actuator or fixed with respect to its respective movement member (11, 13) and carrying a jig element (5).

3. Machine according to any one of claims 1-2 **characterized in that** the sets of movement members (11, 13) of the at least one first longitudinal track (15) and the at least one second longitudinal track (17) operate along the path of the panels (P) between the entrance (6) and the exit (7).

4. Machine according to any one of the preceding claims **characterized in that** at least one jig element (5) is connected to the support structure (3) and is positioned alongside the two longitudinal tracks (15, 17), to slidably support the panels (P) at least between the entrance (6) and the processing area (8) and/or between the processing area (8) and the exit (7).

5. Machine according to any one of the preceding claims **characterized in that** it further comprises a programmable electronic control unit connected to at least one of the active elements of the machine (1).

6. Machine according to any one of the preceding claims **characterized in that** each upper working head (25) is slidably connected to at least one upper transverse track (21) and each lower working head (27) is slidably connected to at least one lower transverse track (23), with said transverse tracks (21, 23) elongated and connected to the support structure (3) and oriented in the transverse direction (Y) with respect to the longitudinal tracks (15, 17), and with said working heads (25, 27) moved along the respective transverse tracks (21, 23) by linear actuators.

7. Machine according to any one of the preceding claims, **characterized in that** at least one working head (25, 27) is provided with at least two tools (29) spaced by a predetermined longitudinal distance.

8. Method for processing panels using the panel processing machine of any one of the preceding claims, comprising the steps of:
- grabbing at least one panel (P) by at least first (11) and/or second (13) movement members at an entrance (6) of the machine (1);
- translating of the at least one panel (P) at least in the longitudinal direction (X);
- processing of the at least one panel (P) by means of at least one tool (29) of at least one working head (25, 27) in correspondence with a processing area (8) of the machine (1), with the at least one tool (29) and/or its respective working head (25, 27) operated at least in the vertical direction;
- releasing of at least one panel (P) at an exit (7) of the machine (1);
the actuation of the at least one tool (29) and/or of its respective working head (25, 27) contributes at least to the vertical component of the processing of the at least one panel (P), and the actuation of the movement members (11, 13) of the at least one panel (P) contributes at least to the longitudinal component of the processing itself, and in that that while the movement members (11, 13) carry the at least one panel (P) between the entrance (6) and the exit (7) at the same time other movement members (11, 13) are free to translate with or without at least one other panel (P); said method being **characterized in that** at least two panels (P) are grabbed and translated by respective movement members (11, 13), with a front panel (P) preceding a rear panel (P) along the longitudinal direction (X), with the tail end of the front panel (P) in contact with the head end of the rear panel (P) or with said tail and head ends longitudinally spaced apart by a distance equal to or less than the predetermined longitudinal distance between the at least two tools (29) of a working head (25, 27);
in correspondence with the processing step, at least one tool (29) of said working head (25, 27) processes the front panel (P), and at the same time at least one other tool (29) of the same working head (25, 27) processes the rear panel (P).

9. Method according to claim 8 **characterized in** regulating the distance between the front and rear panels (P) to determine the working positions of the at least two tools (29) of the working head (25, 27) on said panels (P).

## Patentansprüche

1. Plattenbearbeitungsmaschine umfassend:
- eine Stützstruktur (3);
- einen Satz Spannelemente (5) für die Platten (P), die vorgesehen sind, um die Platten (P) nahezu horizontal auszurichten, während eine obere oder untere Fläche davon auf entsprechenden vorbestimmten Höhen (Z, Z') gehalten wird;
- mindestens einen Satz erster Bewegungselemente (11) und einen Satz zweiter Bewegungselemente (13) die sich in beiden Richtungen entsprechend entlang mindestens einer ersten Längsbahn (15) und mindestens einer zweiten Längsbahn (17) bewegen, die mit der Stützstruktur (3) verbunden sind und in der Längsrichtung (X) zum Bewegen der Platten (P) entlang eines Wegs zwischen einem Eingang (6) und einem Ausgang (7) für die Platten (P) parallel zu der Längsrichtung (X) ausgerichtet sind;
- mindestens einen oberen (25) und/oder unteren (27) Arbeitskopf, die entsprechend oberhalb oder unterhalb eines Bearbeitungsbereichs (8) positioniert sind, der entlang des Wegs angeordnet ist, wobei der mindestens eine Arbeitskopf (25, 27) mit mindestens einem Werkzeug (29) versehen ist, um die Platten (P) zu verarbeiten, wobei der mindestens eine Arbeitskopf (25, 27) und/oder sein entsprechendes mindestens eines Werkzeug (29) mindestens in der vertikalen Richtung durch einen Vertikalaktuator betrieben werden kann;
jedes Bewegungselement (11, 13) umfasst mindestens ein entsprechendes Greifelement (33), wobei jedes Greifelement (33) betreibbar ist, um mindestens eine Platte (P) durch Auslösen eines entsprechenden Greifaktuators zu verriegeln und freizugeben; jedes Greifelement (33) ist in mindestens eine Richtung ausgenommen der Längsrichtung (X) mittels eines entsprechenden Positionsaktuators bewegbar; jedes Bewegungselement (11, 13) umfasst einen Schlitten, der gleitbar an seiner entsprechenden Längsbahn (15, 17) befestigt ist, wobei jeder Positionsaktuator zwischen seinem entsprechenden Schlitten und einem oder mehr Greifelementen (33) zwischengeordnet ist; die mindestens eine erste Längsbahn (15) und die mindestens eine zweite Längsbahn (17) sind an der gleichen Längsseite der Maschine (1) befestigt, wobei ihre entsprechenden Sätze von Bewegungselementen (11, 13) entlang des Wegs der Platten (P) zwischen dem Eingang (6) und dem Ausgang (7) arbeiten; mindestens ein Greifelement (33) wird bezogen auf seinen entsprechenden Schlitten in einer Richtung senkrecht zu der Längsrichtung (X) betrieben, zumindest in Übereinstimmung mit der Schnittstelle der Verlaufsbahn eines Greifelements (33) eines anderen Satzes von Bewegungselementen (11, 13); die Maschine (1) ist **dadurch gekennzeichnet, dass** jedes Greifelement (33), das keine Platte (P) trägt, in der vertikalen Richtung zumindest in Übereinstimmung mit der Schnittstelle der Verlaufsbahn eines Greifelements (33), das eine Platte (P) trägt, betrieben wird, und/oder dadurch, dass jedes Greifelement (33), das mindestens eine Platte (P) trägt, in der Querrichtung (Y) zumindest in Übereinstimmung mit der Schnittstelle der Verlaufsbahn eines Greifelements (33), das keine Platte (P) trägt, betrieben wird.

2. Maschine nach einem der vorhergehenden Ansprüche, **dadurch gekennzeichnet, dass** jedes Greifelement (33) mindestens eine obere Klemmbacke (33a) und mindestens eine untere Klemmbacke (33b) umfasst, wobei mindestens eine Klemmbacke (33a, 33b) durch ihren entsprechenden Aktuator betrieben werden kann oder bezogen auf ihr entsprechendes Bewegungselement (11, 13) fest ist und ein Spannelement (5) trägt.

3. Maschine gemäß einem der Ansprüche 2, **dadurch gekennzeichnet, dass** die Sätze von Bewegungselementen (11, 13) der mindestens einen ersten Längsbahn (15) und der mindesten einen zweiten Längsbahn (17) entlang des Wegs der Platten (P) zwischen dem Eingang (6) und dem Ausgang (7) arbeiten.

4. Maschine gemäß einem der vorhergehenden Ansprüche, **dadurch gekennzeichnet, dass** mindestens ein Spannelement (5) mit der Stützstruktur (3) verbunden ist und entlang der zwei Längsbahnen (15, 17) positioniert ist, um die Platten (P) mindestens zwischen dem Eingang (6) und dem Verarbeitungsbereich (8) und/oder zwischen dem Verarbeitungsbereich (8) und dem Ausgang (7) gleitend zu tragen.

5. Maschine gemäß einem der vorhergehenden Ansprüche, **dadurch gekennzeichnet, dass** sie des Weiteren eine programmierbare elektronische Steuereinheit umfasst, die mit mindestens einem der aktiven Elemente der Maschine (1) verbunden ist.

6. Maschine gemäß einem der vorhergehenden Ansprüche, **dadurch gekennzeichnet, dass** jeder obere Arbeitskopf (25) gleitbar mit mindestens einer oberen Querbahn (21) verbunden ist und jeder untere Arbeitskopf (27) ist gleitbar mit mindestens einer unteren Querbahn (23) verbunden, wobei die Querbahnen (21, 23) längsgestreckt sind und mit der Stützstruktur (3) verbunden sind und bezogen auf die Längsbahnen (15, 17) in der Querrichtung (Y) ausgerichtet sind, und wobei die Arbeitsköpfe (25, 27) durch lineare Aktuatoren entlang der entsprechenden Querbahnen (21, 23) bewegt werden.

7. Maschine gemäß einem der vorhergehenden Ansprüche, **dadurch gekennzeichnet, dass** mindestens einer der Arbeitsköpfe (25, 27) mit mindestens zwei Werkzeugen (29) versehen ist, die mit einem vorbestimmten Längsabstand voneinander beabstandet sind.

8. Verfahren zum Verarbeiten von Platten unter Verwendung der Plattenverarbeitungsmaschine gemäß einem der vorhergehenden Ansprüche, umfassend die Schritte:
- Greifen mindestens einer Platte (P) mittels mindestens eines ersten (11) und/oder zweiten (13) Bewegungselements an einem Eingang (6) der Maschine (1);
- Bewegen der mindestens einen Platte (P) mindestens in die Längsrichtung (X);
- Verarbeiten der mindestens einen Platte (P) mittels mindestens eines Werkzeugs (29) von mindestens einem Arbeitskopf (25, 27) in Übereinstimmung mit einem Verarbeitungsbereich (8) der Maschine (1), wobei das mindestens eine Werkzeug (29) und/oder sein entsprechender Arbeitskopf (25, 27) in mindestens der vertikalen Richtung betrieben wird/werden;
- Freilassen mindestens einer Platte (P) an einem Ausgang (7) der Maschine (1);
die Betätigung des mindestens einen Werkzeugs (29) und/oder seines entsprechenden Arbeitskopfes (25, 27) trägt mindestens zu dem vertikalen Bauteil der Verarbeitung der mindestens einen Platte (P) bei, und die Betätigung des Bewegungselements (11, 13) der mindestens einen Platte (P) trägt mindestens zu dem Längsbauteil der Verarbeitung selbst bei, und dadurch, dass während die Bewegungselemente (11, 13) die mindestens eine Platte (P) zwischen dem Eingang (6) und dem Ausgang (7) trägt, sich zeitgleich andere Bewegungselemente (11, 13) mit oder ohne der mindestens einen Platte (P) frei bewegen, und das Verfahren ist **dadurch gekennzeichnet, dass** mindestens zwei Platten (P) gegriffen werden und durch entsprechende Bewegungselemente (11, 13) bewegt werden, wobei eine vordere Platte (P), die in der Längsrichtung (X) vor einer hinteren Platte (P) angeordnet ist, mit dem hinteren Ende der vorderen Platte (P) in Verbindung mit dem Kopfende der hinteren Platte (P) steht oder mit dem hinteren Ende und dem Kopfende der Länge nach über einen Abstand, der gleich zu der oder weniger als die vorbestimmte Längabstand zwischen den mindestens zwei Werkzeugen (29) eines Arbeitskopfs (25, 27) ist, voneinander beabstandet sind; in Übereinstimmung mit dem Verarbeitungsschritt verarbeitet mindestens ein Werkzeug (29) des Arbeitskopfes (25, 27) die vordere Platte (P), und zeitgleich verarbeitet mindestens ein anderes Werkzeug (29) des gleichen Arbeitskopfes (25, 27) die hintere Platte (P).

9. Verfahren gemäß Anspruch 8, **dadurch gekennzeichnet, dass** der Abstand zwischen den vorderen und hinteren Platten (P) gesteuert wird, um die Arbeitspositionen der mindestens zwei Werkzeuge (29) des Arbeitskopfs (25, 27) auf den Platten (P) zu bestimmen.

## Revendications

1. - Machine de traitement de panneau comprenant :
- une structure de support (3) ;
- un ensemble d'éléments de gabarit (5) pour les panneaux (P), destinés à orienter les panneaux (P) presque horizontalement tout en maintenant une face supérieure ou inférieure de ceux-ci à des hauteurs prédéterminées (Z, Z') respectives ;
- au moins un ensemble de premiers éléments de mouvement (11) et un ensemble de seconds éléments de mouvement (13) se déplaçant en translation dans les deux directions respectivement le long d'au moins un premier rail longitudinal (15) et d'au moins un second rail longitudinal (17) reliés à la structure de support (3) et orientés dans la direction longitudinale (X) pour déplacer les panneaux (P) le long d'un trajet entre une entrée (6) et une sortie (7) pour lesdits panneaux (P) parallèlement à la direction longitudinale (X) ;
- au moins une tête de travail supérieure (25) et/ou inférieure (27) positionnée respectivement au-dessus ou au-dessous d'une zone de traitement (8) située le long dudit trajet, ladite au moins une tête de travail (25, 27) comportant au moins un outil (29) pour traiter les panneaux (P), l'au moins une tête de travail (25, 27) et/ou son au moins un outil (29) respectif étant actionnables au moins dans la direction verticale par un actionneur vertical respectif ;
chaque élément de mouvement (11, 13) comprend au moins un élément de préhension (33) respectif, chaque élément de préhension (33) étant actionnable pour verrouiller et libérer au moins un panneau (P) par l'effet d'un actionneur de préhension respectif ; chaque élément de préhension (33) est mobile dans au moins une direction autre que la direction longitudinale (X) au moyen d'un actionneur de positionnement respectif ; chaque élément de mouvement (11, 13) comprend un chariot fixé de manière coulissante à son rail longitudinal (15, 17) respectif, chaque actionneur de positionnement étant interposé entre son chariot respectif et un ou plusieurs éléments de préhension (33) ; l'au moins un premier rail longitudinal (15) et l'au moins un second rail longitudinal (17) sont fixés sur le même côté longitudinal de la machine (1), leurs ensembles respectifs d'éléments de mouvement (11, 13) fonctionnant le long du trajet des panneaux (P) entre l'entrée (6) et la sortie (7) ; au moins un élément de préhension (33) est actionné par rapport à son chariot correspondant dans une direction perpendiculaire à la direction longitudinale (X) au moins en correspondance avec l'intersection avec la trajectoire d'un élément de préhension (33) d'un ensemble différent d'éléments de mouvement (11, 13) ; la machine (1) étant **caractérisée par le fait que** chaque élément de préhension (33) ne portant aucun panneau (P) est actionné dans la direction verticale au moins en correspondance avec l'intersection avec la trajectoire d'un élément de préhension (33) portant un panneau (P), et/ou **par le fait que** chaque élément de préhension (33) portant au moins un panneau (P) est actionné dans la direction transversale (Y) au moins en correspondance avec l'intersection avec la trajectoire d'un élément de préhension (33) ne portant aucun panneau (P).

2. - Machine selon l'une quelconque des revendications précédentes, **caractérisée par le fait que** chaque élément de préhension (33) comprend au moins une mâchoire supérieure (33a) et au moins une mâchoire inférieure (33b), au moins une mâchoire (33a, 33b) étant actionnable par son actionneur respectif ou fixe par rapport à son élément de mouvement (11, 13) respectif et portant un élément de gabarit (5).

3. - Machine selon l'une quelconque des revendications 1 et 2, **caractérisée par le fait que** les ensembles d'éléments de mouvement (11, 13) de l'au moins un premier rail longitudinal (15) et de l'au moins un second rail longitudinal (17) fonctionnent le long du trajet des panneaux (P) entre l'entrée (6) et la sortie (7).

4. - Machine selon l'une quelconque des revendications précédentes, **caractérisée par le fait qu'**au moins un élément de gabarit (5) est relié à la structure de support (3) et est positionné le long des deux rails longitudinaux (15, 17), pour supporter de manière coulissante les panneaux (P) au moins entre l'entrée (6) et la zone de traitement (8) et/ou entre la zone de traitement (8) et la sortie (7)

5. - Machine selon l'une quelconque des revendications précédentes, **caractérisée par le fait qu'**elle comprend en outre une unité de commande électronique programmable reliée à au moins un des éléments actifs de la machine (1).

6. - Machine selon l'une quelconque des revendications précédentes, **caractérisée par le fait que** chaque tête de travail supérieure (25) est reliée de manière coulissante à au moins un rail transversal supérieur (21) et chaque tête de travail inférieure (27) est reliée de manière coulissante à au moins un rail transversal inférieur (23), lesdits rails transversaux (21, 23) étant allongés et reliés à la structure de support (3) et orientés dans la direction transversale (Y) par rapport aux rails longitudinaux (15, 17), et lesdites têtes de travail (25, 27) étant déplacées le long des rails transversaux (21, 23) respectifs par des actionneurs linéaires.

7. - Machine selon l'une quelconque des revendications précédentes, **caractérisée par le fait qu'**au moins une tête de travail (25, 27) comporte au moins deux outils (29) espacés d'une distance longitudinale prédéterminée.

8. - Procédé de traitement de panneau à l'aide de la machine de traitement de panneau selon l'une quelconque des revendications précédentes, comprenant les étapes :
- saisir au moins un panneau (P) au moins par des premier (11) et/ou second (13) éléments de mouvement à une entrée (6) de la machine (1) ;
- déplacer en translation l'au moins un panneau (P) au moins dans la direction longitudinale (X) ;
- traiter l'au moins un panneau (P) au moyen d'au moins un outil (29) d'au moins une tête de travail (25, 27) en correspondance avec une zone de traitement (8) de la machine (1), l'au moins un outil (29) et/ou sa tête de travail (25, 27) respective étant actionnés au moins dans la direction verticale ;
- libérer au moins un panneau (P) à une sortie (7) de la machine (1) ;
l'actionnement d'au moins un outil (29) et/ou de sa tête de travail (25, 27) respective contribue au moins à la composante verticale du traitement de l'au moins un panneau (P), et l'actionnement des éléments de mouvement (11, 13) de l'au moins un panneau (P) contribue au moins à la composante longitudinale du traitement lui-même, et par le fait que, tandis que les éléments de mouvement (11, 13) transportent l'au moins un panneau (P) entre l'entrée (6) et la sortie (7), en même temps d'autres éléments de mouvement (11, 13) sont libres de se déplacer en translation avec ou sans au moins un autre panneau (P) ; ledit procédé étant **caractérisé par le fait qu'**au moins deux panneaux (P) sont saisis et déplacés en translation par des éléments de mouvement (11, 13) respectifs, un panneau avant (P) précédant un panneau arrière (P) le long de la direction longitudinale (X), l'extrémité arrière du panneau avant (P) étant en contact avec l'extrémité avant du panneau arrière (P) ou lesdites extrémités avant et arrière étant espacées longitudinalement d'une distance inférieure ou égale à la distance longitudinale prédéterminée entre les au moins deux outils (29) d'une tête de travail (25, 27) ; en correspondance avec l'étape de traitement, au moins un outil (29) de ladite tête de travail (25, 27) traite le panneau avant (P) et, en même temps, au moins un autre outil (29) de la même tête de travail (25, 27) traite le panneau arrière (P).

9. - Procédé selon la revendication 8, **caractérisé par** une régulation de la distance entre les panneaux avant et arrière (P) pour déterminer les positions de travail des au moins deux outils (29) de la tête de travail (25, 27) sur lesdits panneaux (P).
